# EUROPÄISCHE PATENTSCHRIFT

(11) **EP 0 938 884 B1**
(45) Veröffentlichungstag und Bekanntmachung des Hinweises auf die Patenterteilung: **02.05.2003**
(21) Anmeldenummer: 99101845.8
(22) Anmeldetag: 28.01.1999
(51) Int. Cl.: A61H 33/02

(54) **Badebecken mit integrieter Filtereinrichtung**
Swimming pool with integrated filtering system
Piscine avec dispositif de filtration integré

(30) Priorität: 26.02.1998 DE 29803341 U
(43) Veröffentlichungstag der Anmeldung: 01.09.1999
(73) Patentinhaber: HOESCH METALL + KUNSTSTOFFWERK GmbH & Co., 52372 Kreuzau-Schneidhausen (DE)
(72) Erfinder:
(74) Vertreter: Langmaack, Jürgen, Dipl.-Ing.

(56) Entgegenhaltungen:
- EP-A- 0 059 407
- US-A- 4 233 694
- US-A- 4 942 630
- US-A- 5 328 602
- US-A- 5 665 228
- US-E- R E35 410

## Beschreibung

Bei einem großen Badebecken, insbesondere einem großen Whirlpool mit mehreren Sitz- und/oder Liegeplätzen, ist es wegen des großen Fassungsvermögens nicht mehr möglich, nach jeder Benutzung die gesamte Wasserfüllung ablaufen zu lassen und vor jeder Benutzung wieder mit frischem Wasser vollständig zu füllen. Die einmal vorhandene Füllung wird lediglich von Zeit zu Zeit ergänzt, während im übrigen ein hygienisch einwandfreier Zustand der Wasserfüllung über eine Filtereinrichtung aufrechterhalten wird. Hierzu ist es bisher üblich, vom Bekkeninnenraum eine Filterkammer abzuteilen, deren Zulauf noch vom Wasserspiegel der Füllung des Beckeninnenraumes überdeckt ist, so daß die Filterkammer mit dem Beckeninnenraum in direkter Verbindung steht und noch, wenn auch als abgesonderter Teil , dem Beckeninnenraum zuzurechnen ist. Beim Auswechseln der Filterpatrone läßt es sich nicht vermeiden, daß Schmutzablagerungen an der Filterpatrone abgestreift und mit dem Restwasser in der Filterkammer unmittelbar in den Beckeninnenraum gelangen und sich darin verteilen können. Derartige Becken sind aus US-A-5,328,602, US-A-Re. 35,410, und US-A-4,233,694 bekannt. EP-A-0 059 407 zeigt ein Badebecken mit einer umgebenden Schwall- und Überlaufkammer, die mit einem eigenen Zulauf für Frischwasser versehen ist und in der eine Filtereinrichtung angeordnet ist, die mit der Saugseite einer Umwälzpumpe verbunden ist. Der Zulauf von Wasser aus dem Beckeninnenraum in die Schwallkammer erfolgt über den Beckenrand infolge Verdrängung durch den Körper eines Benutzers oder bei laufender Frischwasserzufuhr. Ein kontinuierlicher Filterbetrieb ist nicht vorgesehen.

Der Erfindung liegt die Aufgabe zugrunde, diesen Nachteil zu vermeiden.

Die Aufgabe wird erfindungsgemäß mit den im Anspruch 1 angegebenen Mitteln gelöst. Da der Zulauf zur Aufnahmekammer in den Beckeninnenraum im Bereich der Mindestfüllhöhe, d. h. etwas unterhalb des Mindestfüllniveaus ausmündet, ist gewährleistet, daß bei einem Auswechseln der Filterpatrone über den Zulauf das von der Filterpatrone ablaufende Schmutzwasser nicht in den Beckeninnenraum ausgeschwemmt werden kann. Nach dem Einsetzen einer neuen Filterpatrone verbleiben die Schmutzpartikel in der Aufnahmekammer und werden bei Inbetriebnahme der Filtereinrichtung von der Filterpatrone zurückgehalten.

Gemäß einer vorteilhaften Ausgestaltung ist eine den Beckenraum mit der Saugleitung der Pumpe verbindende Abzugsleitung vorsehen und in der Saugleitung in Strömungsrichtung gesehen vor der Einmündung der Abzugsleitung ein Stellventil angeordnet. Aufgrund dieser Anordnung wird während des Betriebes nur ein Teil der Wassermenge über die Filterpatrone aus dem Bekkeninnenraum entnommen, während ein anderer Teil direkt aus dem Beckeninnenraum über die Umwälzpumpe abgezogen. Die Gesamtmenge wird dann druckseitig über die angeschlossenen Whirldüsen wieder in den Beckenraum eingeleitet. Durch die Anordnung des Stellventils kann die Mengenaufteilung einreguliert werden. Ein besonderer Vorteil dieser Anordnung besteht darin, daß bei einem Absinken des Wasserspiegels unter das Füllniveau und damit unter den Absaughorizont des Zulaufs zum Filter die Umwälzpumpe zu keinem Zeitpunkt trockenlaufen kann, da über die Abzugsleitung ungehindert Wasser von der Pumpe abgesaugt werden kann.

In weiterer vorteilhafter Ausgestaltung der Erfindung ist eine zweite Umwälzpumpe mit vorzugsweise geringerer Leistung vorgesehen, deren Saugleitung mit dem Innenraum der Filterpatrone in Verbindung steht und deren Druckseite mit dem Bekkeninnenraum in Verbindung steht. Diese Anordnung hat den Vorteil, daß während der Ruhezeiten, in denen das Badebecken nicht benutzt wird, über eine kleine Umwälzpumpe der Beckeninhalt weiterhin gefiltert wird und somit selbst bei langen Ruhezeiten eine einwandfreie Wasserqualität zur Verfügung steht. in zweckmäßiger Ausgestaltung ist hierbei vorgesehen, daß die Druckseite der zweiten Umwälzpumpe wahlweise direkt oder über die Whirldüsen mit dem Beckeninnenraum verbunden werden kann.

Weitere Ausgestaltungen der Erfindung sind in den Unteransprüchen angegeben.

Die Erfindung wird anhand einer schematischen Zeichnung eines Ausführungsbeispiels näher erläutert.

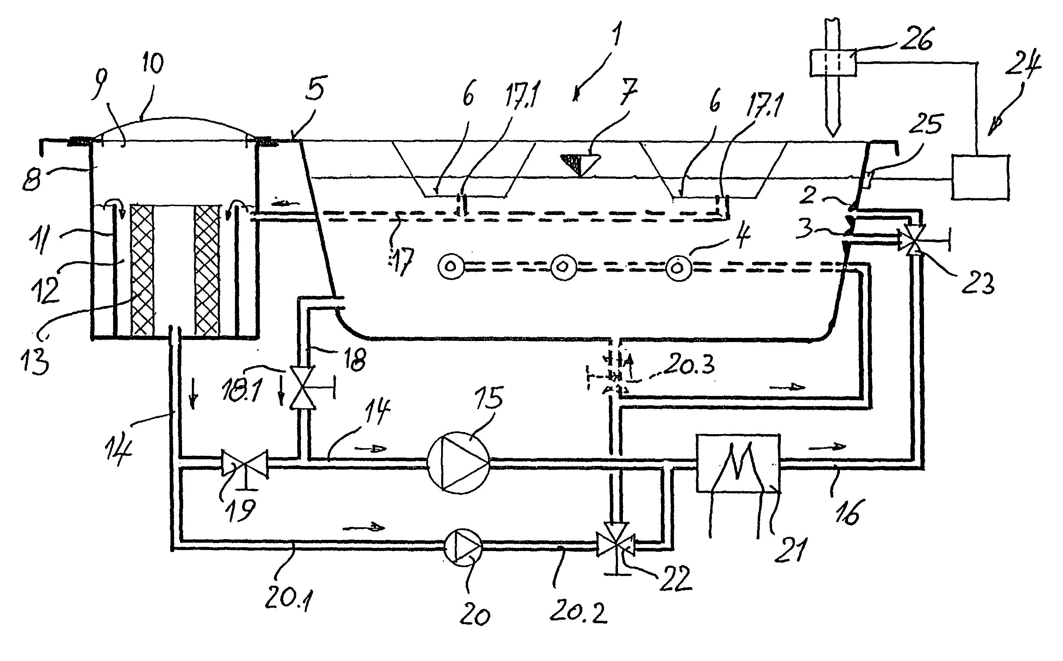

Die Zeichnung zeigt ein Badebecken 1 in Form eines Whirlpools, der in seinem Beckeninnenraum hier nicht näher dargestellte Sitzbereiche und/oder Liegebereiche aufweist. Sowohl in den Sitzbereichen als auch in den Liegebereichen, so beispielsweise in den Rückenlehnen der Sitzbereiche und an den Fußenden der Liegebereiche, sind mehrere, teilweise zu Düsengruppen zusammengefaßte Einstrahldüsen 2, 3 und 4 angeordnet, die unterschiedliche Strahlcharakteristiken aufweisen, so daß hier auf die verschiedenen Körperzonen abgestimmte Strahleinwirkungen erzielt werden können. In der Zeichnung sind diese Einstrahldüsen 2, 3 und 4 nur schematisch in bezug auf die Wasserführung dargestellt, nicht jedoch in bezug auf die geometrische Anordnung im Beckeninnenraum. Die Einstrahldüsen 2, 3 und 4 stehen in üblicher Weise mit einem regelbaren Luftansaug L in Verbindung, so daß in den Beckeninnenraum ein Wasser-Luft-Gemisch eingestrahlt werden kann.

Das Badebecken ist mit einem Beckenrand 5 versehen, der wandseitig im Beckeninnenraum wenigstens eine, vorzugsweise aber mehrere sogenannte Absauginseln 6 aufweist, deren Höhe zwischen 1 und 3 cm unterhalb des Mindestfüllniveaus 7 für das Badebecken liegen. Außerhalb des Beckeninnenraums ist unter einem erweiterten Teil des Beckenrandes 5 ein Aufnahmeraum 8 vorgesehen, der eine obere Revisionsöffnung 9 aufweist, die mit einem Deckel 10 verschließbar ist. Im Aufnahmeraum 8, der zweckmäßigerweise eine Zylinderform besitzt, ist mit Abstand zur Wandung eine zweckmäßigerweise ebenfalls zylindrische Zwischenwand 11 eingesetzt, die sich nur über einen Teil der Raumhöhe erstreckt. Diese Zwischenwand 11 umschließt den eigentlichen Filterraum 12, in dem eine auswechselbare Filterpatrone 13 angeordnet ist und der über eine Saugleitung 14 mit einer Umwälzpumpe 15 verbunden ist, die über ihre Druckleitung 16 mit den Einstrahldüsen 2 und 3 verbunden ist. Der Aufnahmeraum 8 kann auch eine andere Querschnittskontur aufweisen.

Der Aufnahmeraum 8 steht über auf der Außenseite des Badebekkens entlang geführte Zulaufleitungen 17 mit entsprechenden Zulauföffnungen 17.1 in den Überlaufinseln 6 mit dem Beckeninnenraum in Verbindung. Die Zulaufleitungen 17 münden hierbei in den Zwischenraum 8.1 zwischen der Außenwandung der Aufnahmekammer 8 und der Zwischenwand 11 ein, so daß das in die Aufnahmeraum 8 einströmende Wasser nicht unmittelbar auf die Oberfläche der Filterpatrone auftreffen kann, sondern aus dem Zwischenraum 8.1 in den Filterraum 12 nach Art eines Wehrs übertritt und dann durch die Filterpatrone 13 hindurch über die Saugleitung 14 wieder abgezogen wird.

In die Saugleitung 14 mündet ferner in Strömungsrichtung vor der Umwälzpumpe 15 eine Abzugsleitung 18 ein, die unmittelbar mit dem Beckeninnenraum verbunden ist. Damit kann über die Umwälzpumpe 15 sowohl direkt aus dem Beckeninnenraum als auch über die Filterpatrone 13 Wasser entnommen werden kann. Durch ein Stellventil 19 in der Saugleitung 14, das in Strömungsrichtung gesehen vor der Einmündung der Abzugsleitung 18 angeordnet ist, kann nun die Aufteilung des Gesamtförderstroms der Umwälzpumpe 15 eingestellt werden. Eine Teilmenge wird durch die Filterpatrone 13 und eine Teilmenge wird direkt aus dem Beckeninnenraum über die Umwälzpumpe 15 abgezogen. In der Regel reicht es aus, die Mengenaufteilung so vorzunehmen, daß ein Drittel über die Filterpatrone 13 abgezogen wird und zwei Drittel direkt aus dem Beckeninnenraum entnommen werden. Diese Anordnung hat darüber hinaus noch den Vorteil, daß die Umwälzpumpe 15 nicht trockenlaufen kann, wenn das tatsächliche Füllniveau im Beckeninnenraum unter das Niveau der Überlaufinseln 6 absinken sollte. Durch das angedeutete Stellventil 18.1 in der Abzugsleitung 18 ist eine weitere Beeinflussung der Mengenaufteilung möglich.

Bei Stillstand der Pumpen 15 und 20 stellt sich in dem Aufnahmeraum 8 das Niveau 7 ein. Bei Badebetrieb, d. h. wenn zumindest die Umwälzpumpe 15 fördert, wird aus dem Filterraum 20 das Wasser abgesaugt, so daß sich in dem Aufnahmeraum 8 das Niveau 7 bis auf die Oberkante der Zwischenwand 11 absenkt und das Wasser aus dem Beckeninnenraum unter dem natürlichen Gefälle über die Zulaufleitung in den Aufnahmeraum 8 einströmt und über die Oberkante der Zwischenwand 11 in den Filterraum 12 übertritt.

Die Filterpatrone 13 ist ferner mit einer zweiten Umwälzpumpe 20 verbunden, die zweckmäßigerweise eine kleinere Leistung als die Umwälzpumpe 15 aufweist. Die zweite Umwälzpumpe 20 ist mit ihrer Saugseite 20.1 an den Innenraum der Filterpatrone 13 angeschlossen, beispielsweise als Abzweigung zur Saugleitung 14. Mit ihrer Druckseite 20.2 ist sie entweder mit einer gesonderten Einlauföffnung 20.3 im Beckenboden oder vorzugsweise mit wenigstens einem Teil der vorgesehenen Einstrahldüsen, beispielsweise den Einstrahldüsen 4, mit dem Beckeninnenraum verbunden. Die Leistung der Umwälzpumpe 20 wird hierbei so ausgelegt, daß die für den Badebetrieb erforderliche Strahlleistung des mit ihr verbundenen Typs von Einstrahldüsen ausreicht. Damit besteht eine weitere Möglichkeit, zonenweise Wasser in die Beckenfüllung einzustrahlen und zu Massagezwecken zu nutzen.

In der Druckleitung 16 ist ferner eine elektrische Heizeinrichtung 21 angeordnet, so daß bei Betrieb der Pumpe 15 das Wasser aufgeheizt werden kann, um so die Wärmeverluste beim Whirlbetrieb auszugleichen, die nicht nur durch die Wasserumwälzung sondern auch durch den Ansaug von Raumluft zu den Einstrahldüsen bewirkt werden.

Um nun sicherzustellen, daß auch während der Ruhezeiten kein Keimwachstum in der Beckenfüllung stattfinden kann, wird die zweite Umwälzpumpe 20 ständig oder in vorgegebenen Zeitintervallen betrieben, so daß die Beckenfüllung filtriert wird. Hierbei kann es zweckmäßig sein, über ein Dreiwegeventil 22 während dieser Ruhefiltration die von der Umwälzpumpe 20 geförderte Wassermenge ebenfalls über die Heizeinrichtung 21 zu führen, um so die Wärmeverluste durch Abstrahlung auszugleichen. Die Heizeinrichtung 21 wird hierbei zweckmäßigerweise mit zwei Leistungsstufen versehen, so daß im Ruhebetrieb die Heizeinrichtung mit nur geringerer Leistung betrieben werden muß. Über eine hier nicht dargestellte Thermostatsteuerung kann auch im Ruhebetrieb sichergestellt werden, daß eine Mindesttemperatur für die Beckenfüllung aufrechterhalten wird.

Die mit der Druckleitung 16 verbundenen Einstrahldüsen 2 und 3, die entweder unterschiedlichen Beckenzonen zugeordnet sein können oder aber Einstrahldüsen mit unterschiedlicher Strahlcharakteristik sein können, sind über ein Stellventil 23 in der Druckleitung 16 entsprechend ansteuerbar.

Das Badebecken ist ferner mit einer Füllstandsregulierungeinrichtung 24 versehen, die im wesentlichen wenigstens einen Füllstandsensor 25 aufweist, durch den die Einhaltung der Mindestfüllhöhe 7 überwacht wird. Über eine Regeleinrichtung kann dann ein Frischwasserzulauf 26 angesteuert werden, so daß die Mindestfüllhöhe eingehalten wird. Die Höhe des Bekkenrandes 5 gegenüber der Mindestfüllhöhe 7 ist so bemessen, daß bei der Benutzung des Badebeckens durch die vorgesehene Personenzahl der Anstieg der Füllhöhe im wesentlichen ausgeglichen wird. Steigen mehr Personen zu, wird das über den Beckenrand 5 abfließende Wasser mittels einer hier nicht näher dargestellten Überlaufeinrichtung in den Abfluß abgeleitet. Sobald die Badenden das Becken verlassen, wird über die Füllstandsregulierungeinrichtung das Becken wieder bis auf die Mindestfüllhöhe 7 aufgefüllt.

Zum Auswechseln der Filterpatrone 13 wird der Deckel 10 abgenommen und die Filterpatrone nach oben herausgezogen. Da keineunmittelbare Verbindung zwischen dem Filterraum 12 und dem Beckeninnenraum besteht, verbleiben von der Filteroberfläche abschwemmende Schmutzpartikel im Filterraum. Nach dem Einsetzen einer neuen Filterpatrone, werden diese bei Inbetriebname einer der Umwälzpumpen 15 oder 20 zurückgehalten.

## Patentansprüche

1. Badebecken mit integrierter Filtereinrichtung, die einen Aufnahmeraum (8) aufweist, in dem eine hohle, einen Innenraum aufweisende Filterpatrone (13) angeordnet ist und der im Bodenbereich eine mit der Saugseite wenigstens einer Umwälzpumpe (20) über eine Saugleitung (14) verbundene Absaugöffnung aufweist, die mit dem Innenraum der Filterpatrone (13) in Verbindung steht, wobei die Umwälzpumpe druckseitig und saugseitig mit dem Beckeninnenraum in Verbindung steht, **dadurch gekennzeichnet, daß** der Aufnahmeraum (8) für die auswechselbare hohle Filterpatrone (13) außen am Becken angeordnet ist und eine außerhalb des Beckeninnenraums obenliegende Revisionsöffnung (9) für die Filterpatrone (13) aufweist und daß in den Aufnahmeraum (8) wenigstens eine Zulaufleitung (17) einmündet, die unterhalb der bei Nichtbenutzung vorzugebenden Mindestfüllhöhe (7) des Badebeckens (1) in den Beckeninnenraum ausmündet.

2. Badebecken nach Anspruch 1, **dadurch gekennzeichnet, daß** der Aufnahmeraum (8) unterhalb eines den Beckenraum begrenzenden Randteils (5) angeordnet ist und eine im Randteil angeordnete Revisionsöffnung (9) für den Aufnahmeraum (8) vorgesehen ist.

3. Badebecken nach Anspruch 1 oder 2, **dadurch gekennzeichnet, daß** eine den Beckeninnenraum mit der Saugleitung (14) der Umwälzpumpe (20) verbundene Abzugsleitung (18) vorgesehen ist und daß in der Saugleitung (14) in Strömungsrichtung gesehen vor der Einmündung der Abzugsleitung (18) ein Stellventil (19) angeordnet ist.

4. Badebecken nach einem der Ansprüche 1 bis 3, **dadurch gekennzeichnet, daß** in der Abzugsleitung vor der Einmündung in die Saugleitung (14) ein Stellventil (18.1) angeordnet ist.

5. Badebecken nach einem der Ansprüche 1 bis 4, **dadurch gekennzeichnet, daß** eine zweite Umwälzpumpe (20) angeordnet ist, deren Saugleitung (20.1) mit dem Innenraum der Filterpatrone (13) in Verbindung steht und deren Druckseite mit dem Beckeninnenraum in Verbindung steht.

6. Badebecken nach einem der Ansprüche 1 bis 5, **dadurch gekennzeichnet, daß** die Druckseite (20.2) der zweiten Umwälzpumpe (20) wahlweise direkt oder über Einstrahldüsen (4) mit dem Beckeninnenraum verbindbar ist.

7. Badebecken nach einem der Ansprüche 1 bis 6, **dadurch gekennzeichnet, daß** die zweite Umwälzpumpe (20) eine geringere Leistung aufweist als die erste Umwälzpumpe (15).

8. Badebecken nach einem der Ansprüche 1 bis 7, **dadurch gekennzeichnet, daß** zumindest die Leitungen (14, 16) der ersten Umwälzpumpe (15) mit einer Heizeinrichtung (21) verbunden sind.

9. Badebecken nach einem der Ansprüche 1 bis 8, **dadurch gekennzeichnet, daß** eine Füllstandsregulierungseinrichtung (24) mit Frischwasserzulauf (26) zur Einhaltung eines Füllniveaus vorgesehen ist, durch die das Füllniveau um ein vorgegebenes Maß über der Absaugebene (6) der Zulaufleitung (17) zur Aufnahmekammer (8) gehalten wird.

10. Badebecken nach einem der Ansprüche 1 bis 9, mit einem Beckeninnenraum, der wenigstens einen Sitzbereich und wenigstens einen Liegebereich aufweist und dessen Wandungen zumindest für die Rückenlehnenbereiche des Sitzbereichs und des Liegebereichs mit Einstrahldüsen (2, 3) zur Einstrahlung eines Wasser-Luft-Gemisches versehen sind, die mit der Druckleitung (16) der Umwälzpumpe (15) in Verbindung stehen, wobei in der Druckleitung (16) ein Stellventil (23) angeordnet ist, über das die Verteilung der Wassermenge auf die Einstrahldüsen (2, 3) des Sitzbereichs und/oder des Liegebereichs veränderbar ist.

## Claims

1. A bath tub with integrated filtering device comprising a tank (8), which holds a hollow filter cartridge (13) with a cavity, and which comprises in its floor a suction drain, which is connected both with the suction side of at least one circulation pump (20) via a suction pipe (14), and with the cavity of said filter cartridge (13), whereby said circulation pump - with respect to the delivery side and suction side - is connected to the interior space of said tub, **characterised in that** said tank (8) for said replaceable hollow filter cartridge (13) is mounted outside on said tub and comprises an inspection hatch (9) at the top outside the interior space of said tub for said filter cartridge (13) and **in that** at least one inlet pipe (17) runs into said tank (8) and leads into the interior space of said tub below the minimum filling level (7) to be determined when said bath tub is not in use.

2. A bath tub according to Claim 1, **characterised in that** said tank (8) is mounted under a rim (5) confining the interior space of said tub and **in that** said rim provides said inspection hatch (9) for said tank (8).

3. A bath tub according to Claim 1 or 2, **characterised in that** it provides a drain pipe (18) connecting the interior space of said tub with said suction pipe (14) of said circulation pump (20) and **in that** a control valve (19) is placed in the direction of the flow in front of the junction of said drain pipe (18) in said suction pipe (14).

4. A bath tub according to any of the Claims 1 to 3, **characterised in that** said drain pipe is equipped with a control valve (18.1) placed in front of the junction of said suction pipe (14).

5. A bath tub according to any of the Claims 1 to 4, **characterised in that** a second circulation pump (20) is provided the suction pipe (20.1) of which is connected to the cavity of said filter cartridge (13) and the delivery side of which is connected to the interior space of said tub.

6. A bath tub according to any of the Claims 1 to 5, **characterised in that** the delivery side (20.2) of said second circulation pump (20) is able to be connected, at option, either directly or via water jets (4) to the interior space of said tub.

7. A bath tub according to any of the Claims 1 to 6, **characterised in that** said second circulation pump (20) has a lower output than said first circulation pump (15).

8. A bath tub according to any of the Claims 1 to 7, **characterised in that** at least said pipes (14, 16) of said first circulation pump (15) are connected with a heater device (21).

9. A bath tub according to any of the Claims 1 to 8, **characterised in that** a filling level regulation device (24) with fresh water supply (26) is provided to control the filling level, by means of which the filling level is kept above the suction level (6) of the inlet pipe (17) leading to said tank (8) by a predetermined level.

10. A bath tub according to any of the Claims 1 to 9, the interior space of which comprises at least one seating area and at least one lying area and the walls of which, at least with respect to the backrests of the seating area and the lying area, are equipped with water jets (2,3), which supply a water/air mixture and which are connected to said delivery pipe (16) of said circulation pump (15), whereby said delivery pipe (16) is equipped with a control valve (23) by means of which the distribution of the water level to the water jets (2,3) of the seating area and/or the lying area is able to be changed.

## Revendications

1. Piscine avec dispositif de filtration intégré présentant une chambre de réception (8) dans laquelle est disposée une cartouche filtrante (13) creuse comprenant un espace intérieur et qui présente, dans le fond, une bouche d'aspiration raccordée au côté aspiration d'au moins une pompe de circulation (20) au travers d'une conduite d'aspiration (14), laquelle bouche d'aspiration est en communication avec l'espace intérieur de la cartouche filtrante (13), la pompe de circulation étant en communication, côté refoulement et côté aspiration, avec l'espace intérieur de la piscine, **caractérisée en ce que** la chambre de réception (8), destinée à contenir la cartouche filtrante (13) creuse amovible, est disposée à l'extérieur de la piscine, et présente une ouverture de visite (9), pour la cartouche filtrante (13), située au dessus et à l'extérieur de l'espace intérieur de la piscine et **en ce qu'**au moins une conduite d'amenée (17) débouche, d'un côté dans la chambre de réception (8), et de l'autre côté dans l'espace intérieur de la piscine, au-dessous du niveau de remplissage minimal (7) de ladite piscine (1) en cas de non utilisation.

2. Piscine selon la revendication 1, **caractérisée en ce que** la chambre de réception (8) est disposée au-dessous d'un bord (5) délimitant l'espace de la piscine et **en ce qu'**une ouverture de visite (9) pour ladite chambre de réception (8) est prévue dans le bord.

3. Piscine selon la revendication 1 ou 2, **caractérisée en ce qu'**une conduite d'évacuation (18), reliant l'espace intérieur de la piscine à la conduite d'aspiration (14) de la pompe de circulation (20), est prévue et **en ce qu'**une vanne de régulation (19) est disposée dans la conduite d'aspiration (14) dans le sens de l'écoulement avant l'embranchement de la conduite d'évacuation (18).

4. Piscine selon l'une quelconque des revendications 1 à 3, **caractérisée en ce qu'**une vanne de régulation (18.1) est disposée dans la conduite d'évacuation avant l'embranchement dans la conduite d'aspiration (14).

5. Piscine selon l'une quelconque des revendications 1 à 4, **caractérisée en ce qu'**elle comprend une deuxième pompe de circulation (20) dont la conduite d'aspiration (20.1) est en communication avec l'espace intérieur de la cartouche filtrante (13) et dont le côté refoulement est en communication avec l'espace intérieur de la piscine.

6. Piscine selon l'une quelconque des revendications 1 à 5, **caractérisée en ce que** le côté refoulement (20.2) de la deuxième pompe de circulation (20) peut être raccordé au choix à l'espace intérieur de la piscine soit directement, soit au travers de buses de projection (4).

7. Piscine selon l'une quelconque des revendications 1 à 6, **caractérisée en ce que** la deuxième pompe de circulation (20) présente une puissance plus faible que la première pompe de circulation (15).

8. Piscine selon l'une quelconque des revendications 1 à 7, **caractérisée en ce qu'**au moins les conduites (14, 16) de la première pompe de circulation (15) sont raccordées à un dispositif de chauffage (21).

9. Piscine selon l'une quelconque des revendications 1 à 8, **caractérisée en ce qu'**il est prévu un dispositif de régulation du niveau (24) pourvu d'une amenée d'eau douce (26) pour entretenir un niveau de remplissage, lequel dispositif maintient le niveau de remplissage à une hauteur prédéterminée au dessus du niveau d'aspiration (6) de la conduite d'amenée (17) dirigée vers la chambre de réception (8).

10. Piscine selon l'une quelconque des revendications 1 à 9, comprenant un espace intérieur de piscine présentant au moins une partie permettant de s'asseoir et au moins une partie permettant de s'allonger et dont les parois sont pourvues de buses de projection (2, 3) pour la projection d'un mélange eau-air au moins au niveau des parties de dossier de la partie permettant de s'asseoir et de la partie permettant de s'allonger, lesquelles buses de projection sont en communication avec la conduite de pression (16) de la pompe de circulation (15), une vanne de régulation (23) étant disposée dans la conduite de pression (16) grâce à laquelle la répartition de la quantité d'eau au niveau des buses de projection (2, 3) de la partie permettant de s'asseoir et/ou de la partie permettant de s'allonger peut être modifiée.
